# EUROPEAN PATENT APPLICATION

(11) **EP 3 690 990 A1**
(43) Date of publication of application: **05.08.2020**
(21) Application number: 18862607.1
(22) Date of filing: 28.09.2018
(51) Int. Cl.: H01M 4/02, H01G 11/28, H01M 4/66, H01M 4/13, H01M 4/131

(54) **ELECTRODE AND ELECTRICITY STORAGE ELEMENT**

(30) Priority: 29.09.2017 JP 2017191551
(71) Applicant: GS Yuasa International Ltd., Kyoto-shi, Kyoto 601-8520 (JP); Robert Bosch GmbH, 70442 Stuttgart (DE)
(72) Inventor: TSUJITA Kohei, Kyoto-shi Kyoto 601-8520 (JP); OHSUGI Yuta, Kyoto-shi Kyoto 601-8520 (JP); TANABE Morito, Kyoto-shi Kyoto 6018520 (JP); MUKAI Hiroshi, Kyoto-shi Kyoto 601-8520 (JP); WATARU Yukihiro, Kyoto-shi Kyoto 601-8520 (JP); TABUCHI Toru, Kyoto-shi Kyoto 601-8520 (JP)
(74) Representative: Isarpatent
(86) International application number: PCT/JP2018/036559
(87) International publication number: WO 2019/066066

(57) **Abstract**

An aspect of the present invention is an electrode for an energy storage device including a conductive substrate, an intermediate layer, and an active material layer in this order. In this electrode, the intermediate layer includes a conductive agent, an inorganic oxide, and a binder, and the content of the inorganic oxide in the intermediate layer is 30% by mass or more and 90% by mass or less.

## Description

### TECHNICAL FIELD

The present invention relates to an electrode and an energy storage device.

### BACKGROUND ART

Secondary batteries typified by lithium ion secondary batteries are widely used for electronic devices such as personal computers and communication terminals, automobiles and the like because these secondary batteries have a high energy density. In such energy storage devices such as secondary batteries and capacitors, abnormalities such as heat generation and ignition may occur due to, for example, use not usually foreseen. For example, a short circuit may occur between electrodes due to an impact such as a drop or a foreign substance mixed during manufacturing, and as a result, heat may be excessively generated.

Conventionally, as a technique of securing safety of a battery by reliably shutting off a charging current even when a battery temperature rises rapidly due to an overcharged state, a lithium ion secondary battery is disclosed in which a conductive layer formed on a positive electrode current collector contains a substance (lithium carbonate) decomposed at a high potential in an overcharged state, when overpotential results in a high potential (e.g., 4.5 to 5.5 V), the substance decomposed at a high potential is decomposed to generate a gas, and internal resistance of the battery increases so that the charging current can be shut off (see Patent Document 1).

### PRIOR ART DOCUMENT

### PATENT DOCUMENT

Patent Document 1: JP-A-2000-77061

### SUMMARY OF THE INVENTION

### PROBLEMS TO BE SOLVED BY THE INVENTION

However, in order for such a conductive layer to have high resistance, the battery needs to be at a high voltage in the overcharged state, and when the battery is not in the overcharged state, a heat generation suppressing effect at the time of a short circuit is not sufficient.

The present invention has been made in view of the above circumstances, and an object of the present invention is to provide an electrode whose safety is high because an increase in a short-circuit current is suppressed when a short circuit occurs between electrodes and an energy storage device including the electrode.

### MEANS FOR SOLVING THE PROBLEMS

An aspect of the present invention devised for solving the problem described above is an electrode for an energy storage device including a conductive substrate, an intermediate layer, and an active material layer in this order. In this electrode, the intermediate layer includes a conductive agent, an inorganic oxide, and a binder, and the content of the inorganic oxide in the intermediate layer is 30% by mass or more and 90% by mass or less.

Another aspect of the present invention devised for solving the problem described above is an energy storage device including the electrode.

### ADVANTAGES OF THE INVENTION

The present invention can provide an electrode whose safety is high because an increase in a short-circuit current is suppressed when a short circuit occurs between electrodes and an energy storage device including the electrode.

### BRIEF DESCRIPTION OF THE DRAWINGS

Fig. 1 is an external perspective view showing a nonaqueous electrolyte secondary battery according to one embodiment of the present invention.
Fig. 2 is a schematic diagram showing an energy storage apparatus including a plurality of the nonaqueous electrolyte secondary batteries according to an embodiment of the present invention.
Fig. 3 is a graph showing a change in resistance due to heating in Example.
Fig. 4 is a graph showing a change in resistance due to heating in Example.
Fig. 5 is a graph showing results of a heating test in Example.
Fig. 6 is a graph showing results of a nail penetration test in Example.

### MODE FOR CARRYING OUT THE INVENTION

An electrode according to one embodiment of the present invention is an electrode for an energy storage device including a conductive substrate, an intermediate layer, and an active material layer in this order. In this electrode, the intermediate layer includes a conductive agent, an inorganic oxide, and a binder, and the content of the inorganic oxide in the intermediate layer is 30% by mass or more and 90% by mass or less.

According to the electrode, high safety can be provided by suppressing an increase in a short-circuit current when a short circuit occurs between electrodes. The reason why such an effect occurs is not clear, but is considered as follows. Depending on the type of compound, an inorganic oxide has, for example, excellent stability at high temperatures and positive temperature coefficient (PTC) characteristics in which an electrical resistance value changes by a positive coefficient when the temperature increases and exhibits a good function as an insulating material during excessive heat generation due to a short circuit or the like. Thus, an electron conduction path between the conductive agents in the intermediate layer is separated, and an electron conduction path between the substrate and the active material layer is separated, an increase in short-circuit current can be suppressed when a short circuit occurs. As described above, in the electrode, a current shutdown function operates in accordance with excessive heat generation due to a short circuit or the like, and the increase in a short-circuit current can be suppressed, so that high safety can be provided. In particular, when the content of the inorganic oxide in the intermediate layer is 30% by mass or more and 90% by mass or less, it is possible to enhance a suppression effect on an increase in a short-circuit current during excessive heat generation while securing good conductivity during normal operation.

The content of the inorganic oxide in the intermediate layer is preferably 85% by mass or less. When the content of the inorganic oxide in the intermediate layer is equal to or less than the upper limit, good conductivity during normal use and the suppression effect on the increase in a short-circuit current during excessive heat generation can be exhibited in a well-balanced manner.

The content of the binder in the intermediate layer is preferably 5% by mass or more. When the content of the binder in the intermediate layer is equal to or more than the lower limit, the binder has a sufficient binding property.

The content of the conductive agent in the intermediate layer is preferably 2% by mass or more and 15% by mass or less. With the content of the conductive agent falling within the above range, while good conductivity is secured during normal operation, the electron conduction path between the conductive agents is sufficiently separated during excessive heat generation, and the suppression effect on the increase in a short-circuit current during excessive heat generation can be enhanced. When the upper limit of the content of the conductive agent is in the above range, the magnitude of the short-circuit current is suppressed, so that the safety can be further improved.

The content of the inorganic oxide with respect to the content of the conductive agent in the intermediate layer is preferably 3 times or more and 20 times or less by mass ratio. With the content of the inorganic oxide falling within the above range, while good conductivity is secured during normal operation, the electron conduction path between the conductive agents is sufficiently separated during excessive heat generation, and the suppression effect on the increase in a short-circuit current during excessive heat generation can be enhanced.

The binder preferably contains a fluororesin. When the binder contains the fluororesin, a fluororesin containing fluorine having a small intermolecular force and a low surface energy swells with heat generation and has an appropriate binding property as a binder. As a result, by using the fluororesin, the insulating action of the inorganic oxide at the time of heat generation relatively easily separates the conductive agents or the substrate and the active material layer, and the suppression effect on the increase in a short-circuit current during excessive heat generation can be enhanced.

The intermediate layer preferably further contains a compound that causes a crosslinking reaction by heat. Since the intermediate layer contains the compound that causes a crosslinking reaction by heat, the conductive agents or the substrate and the active material layer are relatively easily separated due to the crosslinking reaction of a crosslinkable compound during excessive heat generation, and the suppression effect on the increase in a short-circuit current during excessive heat generation can be enhanced.

The electrode is preferably a positive electrode. Providing the intermediate layer in the positive electrode with lower conductivity than the negative electrode can provide a higher blocking effect on conductivity when a short circuit occurs between the electrodes than providing the intermediate layer in the negative electrode including an active material layer with higher conductivity than the positive electrode active material layer and using a copper foil with good conductivity as a substrate.

An energy storage device according to one embodiment of the present invention is an energy storage device including the electrode. Since the energy storage device includes the electrode, the safety can be improved by suppressing an increase in a short-circuit current when a short circuit occurs between electrodes.

Hereinafter, a positive electrode as one embodiment of the electrode of the present invention, and a nonaqueous electrolyte secondary battery (hereinafter, may be simply referred to as "secondary battery") as one embodiment of the energy storage device of the present invention will be described in detail.

### <Positive Electrode (Electrode)>

The positive electrode according to one embodiment of the present invention includes a positive electrode substrate, an intermediate layer, and a positive electrode active material layer in this order. The positive electrode substrate is an example of a substrate, and the positive electrode active material layer is an example of an active material layer. The intermediate layer and the positive electrode active material layer may be stacked only on one side of the positive electrode substrate, or may be stacked on both sides. In the present embodiment, the positive electrode is used as a positive electrode of an energy storage device. When the electrode is a positive electrode, an influence of a decrease in conductivity during normal operation, which may occur by providing the intermediate layer, hardly occurs. Thus, it is possible to enhance the suppression effect on the increase in a short-circuit current during excessive heat generation while securing good conductivity during normal operation.

### [Positive electrode substrate]

The positive electrode substrate is a substrate having conductivity. As the material of the positive electrode substrate, a metal such as aluminum, titanium, tantalum, or stainless steel, or an alloy thereof is used. Among these materials, aluminum and an aluminum alloy are preferred for the balance among the potential resistance, conductivity level, and cost. Exemplified as a form of the positive electrode substrate are a foil and a deposited film, and a foil is preferred in terms of costs. That is, an aluminum foil is preferred as the positive electrode substrate. Examples of aluminum and the aluminum alloy include A1085P and A3003P specified in JIS-H-4000 (2014).

### [Intermediate layer]

The intermediate layer is disposed between the positive electrode substrate and the positive electrode active material layer and covers at least a portion of the surface of the positive electrode substrate. The intermediate layer includes a conductive agent, an inorganic oxide, and a binder. Generally, the intermediate layer is a layer having a function of reducing contact resistance between the positive electrode substrate and the positive electrode active material layer. The intermediate layer has a function of interrupting current during excessive heat generation, in addition to the above function.

### (Conductive agent)

The conductive agent contained in the intermediate layer is not particularly limited as long as it has conductivity. Examples of the conductive agent include carbon blacks such as furnace black, acetylene black, and ketjen black, natural or artificial graphite, metal, and conductive ceramic. Among these conductive agents, carbon black is preferred. The shape of the conductive agent is usually particulate. Having "conductivity" means having a volume resistivity of 10⁷ Ω ·cm or less that is measured in accordance with JIS-H-0505 (1975).

A primary particle size of the conductive agent is preferably, for example, 20 nm or more and 1 pm or less. By using a conductive agent having the above particle size, the electron conduction path between the conductive agents is easily separated due to the insulating action of the inorganic oxide, and the suppression effect on the increase in a short-circuit current during excessive heat generation can be further enhanced. The particle size means a value (D50) at which a volume-based cumulative distribution calculated in accordance with JIS-Z-8819-2 (2001) is 50%. The suppression effect on the increase in a short-circuit current during excessive heat generation can be enhanced.

The lower limit of the content of the conductive agent in the intermediate layer may be, for example, 1% by mass, preferably 2% by mass, and more preferably 3% by mass. When the content of the conductive agent in the intermediate layer is equal to or more than the lower limit, good conductivity can be exhibited during normal use. The upper limit of the content of the conductive agent in the intermediate layer may be, for example, 20% by mass, preferably 15% by mass, and more preferably 13% by mass. When the upper limit of the content of the conductive agent in the intermediate layer is in the above range, the electron conduction path between the conductive agents is effectively separated due to the insulating action of the inorganic oxide, and the suppression effect on the increase in a short-circuit current during excessive heat generation can be further enhanced. When the content of the conductive agent in the intermediate layer is 15% by mass or less, the magnitude of the short-circuit current is suppressed, so that the safety can be further improved.

### (Inorganic oxide)

The inorganic oxide includes a metal oxide such as magnesium oxide and an inorganic compound having a titanate compound such as titanate as a constituent element. The inorganic oxide is typically insulating.

Examples of the inorganic oxide include a metal oxide and a titanate compound. Since the metal oxide is stable at a high temperature, the metal oxide can function as an insulating layer even when the binder of the intermediate layer is dissolved during excessive heat generation due to a short circuit or the like. Since the resistance of a titanate compound increases as the temperature rises, the titanate compound exhibits a better insulating action during excessive heat generation due to a short circuit or the like. Therefore, when the intermediate layer contains the inorganic oxide, a current shutdown function operates, and the increase in a short-circuit current can be suppressed, so that high safety can be provided. The inorganic oxide can be used alone or in combination of two or more.

Examples of the metal oxide include alumina, titanium oxide, magnesium oxide, silica, and aluminosilicate. Among these metal oxides, alumina is preferred.

Examples of the titanate compound include an alkaline earth metal titanate compound and a rare earth metal titanate compound. Examples of the alkaline earth metal titanate compound include barium titanate, calcium titanate, strontium titanate, and magnesium titanate. Examples of the rare earth metal titanate compound include yttrium titanate, neodymium titanate, samarium titanate, dysprosium titanate, and lanthanum titanate. Among these compounds, barium titanate is preferred from the viewpoint of a high dielectric constant.

The particle size of the inorganic oxide is preferably larger than the particle size of the conductive agent. By using the inorganic oxide having such a particle size, the inorganic oxide exists in a state of being higher than the conductive agent. Thus, a contact between the positive electrode substrate and the positive electrode active material layer via the conductive agent can be prevented, and an effect of suppressing the increase in a short-circuit current can be improved. A particle size of the inorganic oxide is preferably, for example, 50 nm or more and 10 pm or less. When the particle size of the inorganic oxide is in the above range, flatness of the intermediate layer can be kept good. The particle size means a value (D50) at which a volume-based cumulative distribution calculated in accordance with JIS-Z-8819-2 (2001) is 50%.

A BET specific surface area of the inorganic oxide is, for example, preferably 4 m²/g or more and 100 m²/g or less, and more preferably 10 m²/g or more and 80 m²/g or less. When the BET specific surface area is in such a range, an anchor effect of the inorganic oxide can be increased, and the effect of suppressing the increase in a short-circuit current can be improved.

The lower limit of the content of the inorganic oxide with respect to the content of the conductive agent in the intermediate layer is preferably three times by mass ratio, more preferably four times, and still more preferably six times. When the content of the inorganic oxide with respect to the conductive agent is equal to or more than the lower limit, the insulating action according to the inorganic oxide in an amount sufficient to cause the above-described separation can be obtained with respect to the conductive agent, so that the suppression effect on the increase in a short-circuit current can be enhanced. The upper limit of the content of the inorganic oxide with respect to the content of the conductive agent in the intermediate layer is preferably 20 times by mass ratio, more preferably 16 times, and still more preferably 12 times. When the content of the inorganic oxide with respect to the conductive agent is equal to or less than the upper limit, a sufficient amount of the conductive agent can be present in the intermediate layer, and good conductivity during normal operation can be secured.

The lower limit of the content of the inorganic oxide in the intermediate layer is 30% by mass, preferably 50% by mass, and more preferably 60% by mass. When the content of the inorganic oxide in the intermediate layer is equal to or more than the lower limit, since the insulating action according to the inorganic oxide in an amount sufficient to cause the above-described separation can be obtained with respect to the conductive agent, the electron conduction path between the conductive agents or the electron conduction path between the positive electrode substrate and the positive electrode active material layer is effectively separated, and a more excellent shutdown function can be exhibited. The upper limit of the content of the inorganic oxide in the intermediate layer is 90% by mass, preferably 85% by mass, and more preferably 82% by mass. When the content of the inorganic oxide in the intermediate layer is equal to or less than the upper limit, good conductivity during normal use and the suppression effect on the increase in a short-circuit current during excessive heat generation can be exhibited in a well-balanced manner.

### (Binder)

Examples of the binder (binding agent) include thermoplastic resins such as fluororesins (polytetrafluoroethylene (PTFE), polyvinylidene fluoride (PVDF) and the like), polyethylene, polypropylene and polyimide; elastomers such as ethylene-propylene-diene rubber (EPDM), sulfonated EPDM, styrene butadiene rubber (SBR) and fluorine rubber; and polysaccharide polymers. Among these binders, a fluororesin is preferred, and PVDF is more preferred. A fluororesin containing fluorine having a small intermolecular force and a low surface energy swells with heat generation and has an appropriate binding property as a binder. As a result, by using the fluororesin, the insulating action of the inorganic oxide at the time of heat generation relatively easily separates the conductive agents or the substrate and the active material layer, and the shutdown function can be more effectively exhibited.

The lower limit of the content of the binder in the intermediate layer is preferably 5% by mass, and more preferably 10% by mass. The upper limit of the content is preferably 30% by mass, and more preferably 20% by mass. With the content of the binder in the intermediate layer falling within the above range, a sufficient binding property and separability of the electron conduction path between the conductive agents or the electron conduction path between the positive electrode substrate and the positive electrode active material layer during excessive heat generation can be exhibited in a well-balanced manner.

### (Other components)

The intermediate layer may further contain components other than the conductive agent, the inorganic oxide, and the binder from the viewpoint of improving the effect of suppressing the increase in a short-circuit current. Examples of the other components include compounds that cause a crosslinking reaction by heat.

Examples of the compounds that cause a crosslinking reaction by heat (hereinafter, also referred to as thermally crosslinkable compounds) include epoxy compounds (polyglycerol polyglycidyl ether, sorbitol polyglycidyl ether, etc.), a polyfunctional (meth)acrylate (trimethylolpropane triacrylate, dipentaerythritol pentaacrylate, etc.), polyoxyalkylene compounds (polyethylene glycol, polypropylene glycol, etc.), and isocyanate compounds (2,4-tolylene diisocyanate, 2,6-tolylene diisocyanate, etc.). Examples of the thermally crosslinkable compounds include a thermosetting resin described later and a monomer of the thermosetting resin. The thermally crosslinkable compound can be used in combination with a thermal polymerization initiator.

The thermally crosslinkable compound is preferably a polymer having a plurality of branched structures. When a crosslinkable compound is a monomer, the crosslinking reaction may occur at a relatively low temperature, which may make it difficult to control the crosslinking reaction. On the other hand, in the case of a crosslinkable compound that is a polymer, the crosslinking reaction can be started and allowed to proceed at a temperature (for example, higher than 100°C or higher than 150°C) corresponding to heat generation at the time of abnormality. For this reason, by using the crosslinkable compound that is a polymer, it is possible to perform good charge and discharge without the crosslinking reaction proceeding during normal use, and to exhibit the shutdown function more effectively at the time of abnormality. Since the crosslinkable compound is the polymer having a plurality of branched structures, while the crosslinking reaction is efficiently caused by a large number of reactive groups present at terminals, a dense three-dimensional crosslinking structure is formed due to crosslinking, and electrical resistance can be increased effectively.

The thermally crosslinkable compound is more preferably an oligomer. Specifically, a lower limit of a number average molecular weight of the crosslinkable compound is preferably 200, and the upper limit is preferably 3,000. When the number average molecular weight of the crosslinkable compound is equal to or more than the lower limit, the crosslinking reaction at the temperature corresponding to heat generation at the time of abnormality can be more appropriately caused. When the number average molecular weight of the crosslinkable compound is equal to or less than the upper limit, the insulating property can be more effectively increased due to the crosslinking reaction.

Examples of the thermally crosslinkable compound that is the polymer having a plurality of branched structures include a so-called thermosetting resin. Examples of the thermosetting resins include melamine resin, urea resin, urethane resin, epoxy resin, alkyd resin, phthalic resin, allyl resin, phenol resin, benzoxazine resin, xylene resin, ketone resin, furan resin, wholly aromatic polyimide, polyaminobismaleimide resin and a reaction product of bismaleimide and barbituric acids.

Among these resins, the reaction product of bismaleimide and barbituric acids, that is, a compound obtained as a reaction product of bismaleimide and barbituric acids is preferred. This compound has many branches and has a structure having a vinylene group (-CH=CH-) derived from bismaleimide and an amino group derived from barbituric acids as terminal reactive groups. The crosslinking reaction of these groups proceeds at a temperature higher than 100°C, preferably at about 150°C. Therefore, by using this compound, the crosslinking reaction can effectively proceed at the time of abnormality such as heat generation, and the insulating property can be improved.

Examples of bismaleimides include N, N'-bismaleimide-4,4'-diphenylmethane, 1,1'-(methylenedi-4,1-phenylene) bismaleimide, N, N'-(1,1'-biphenyl-4,4'-diyl)bismaleimide, N, N'-(4-methyl-1,3-phenylene)bismaleimide, 1,1'-(3,3'-dimethyl-1,1'-biphenyl-4,4'-diyl)bismaleimide, N, N'-ethylenedimaleimide, N, N'-(1,2-phenylene)dimaleimide, N, N'-(1,3-phenylene)dimaleimide, N, N'-thiodimaleimide, N, N'-dithiodimaleimide, N, N'-ketonedimaleimide, N, N'-methylene-bismaleimide, bis-maleimide methyl-ether, 1,2-bis-(maleimide)-1,2-ethanethol, N, N'-4,4'-diphenylether-bis-maleimide, and 4,4'-bis(maleimide)-diphenylsulfone.

Barbituric acids refer to a barbituric acid and a derivative thereof. Barbituric acids function as monomers, polymerization initiators, chain transfer agents, chain stoppers, radical scavengers and the like. By reacting barbituric acids having such a function with bismaleimide, an oligomer or polymer having a complex multibranched structure is formed.

The thermally crosslinkable compound preferably has a vinyl group (CH₂=CH-) or a vinylene group (-CH=CH-) and an amino group. Among the vinyl group and the vinylene group, the vinylene group is preferred. The amino group may be any of a primary amino group, a secondary amino group, and a tertiary amino group, and among these amino groups, the secondary amino group (-NH-) is preferred. As described above, since the vinyl group or the vinylene group and the amino group generally cause the crosslinking reaction to occur at the temperature (for example, higher than 100°C) corresponding to heat generation at the time of abnormality of a secondary battery, the suppression effect on the increase in a short-circuit current during excessive heat generation can be further enhanced. Examples of the crosslinkable compound having the vinyl group or the vinylene group and the amino group include a resin using the above-described bismaleimide and barbituric acids as raw materials (reactants), and a polyaminobismaleimide resin.

The lower limit of the content of the thermally crosslinkable compound in the intermediate layer is not particularly limited but may be, for example, 5% by mass, preferably 15% by mass, more preferably 20% by mass, and still more preferably 25% by mass. The upper limit of the content is not particularly limited but may be, for example, 80% by mass, preferably 50% by mass, more preferably 45% by mass, and still more preferably 40% by mass. When the content of the crosslinkable compound is equal to or more than the lower limit, the suppression effect on the increase in a short-circuit current during excessive heat generation can be further enhanced. When the content of the crosslinkable compound is equal to or less than the upper limit, good conductivity can be exhibited during normal use.

An average thickness of the intermediate layer is not particularly limited, but the lower limit is preferably 0.5 pm, more preferably 1 pm, and still more preferably 2 pm. The upper limit of the average thickness is preferably 10 pm, and more preferably 6 pm. When the average thickness of the intermediate layer is equal to or more than the lower limit, the shutdown function can be further enhanced. When the average thickness of the intermediate layer is equal to or less than the upper limit, the thickness of the positive electrode can be reduced. The average thickness of the intermediate layer refers to a value obtained by measuring and averaging the thickness of the intermediate layer at five or more points in a cross-sectional scanning electron microscope (SEM) of an electrode including a conductive substrate, the intermediate layer, and an active material layer. The cross-sectional SEM is a method of preparing a cut surface of a sample and observing the cross section with a scanning electron microscope.

### (Positive active material layer)

The positive electrode active material layer is formed from a so-called positive composite containing a positive active material. The positive composite that forms the positive electrode active material layer contains optional components such as a conductive agent, a binder, a thickener and a filler as necessary.

Examples of the positive electrode active material include composite oxides represented by LiₓMO_{y} (M represents at least one transition metal) (LiₓCoO₂, LiₓNiO₂, LiₓMnO₃, LiₓNiₐCo_{(1-α)}O₂, LiₓNi_{α}Mn_{β}Co_{(1-α-β)}O₂ and the like each having a layered α-NaFeO₂ crystal structure, and LiₓMn₂O₄, LiₓNi_{α}Mn_{(2-α})O₄ and the like each having a spinel-type crystal structure), and polyanion compounds represented by Li_{w}Meₓ(XO_{y})_{z} (Me represents at least one transition metal, and X represents, for example, P, Si, B, V or the like) (LiFePO₄, LiMnPO₄, LiNiPO₄, LiCoPO₄, Li₃V₂(PO₄)₃, Li₂MnSiO₄, Li₂CoPO₄F and the like). Elements or polyanions in these compounds may be partially substituted with other elements or anionic species. In the positive electrode active material layer, one of these compounds may be used singly, or two or more of these compounds may be mixed and used.

The conductive agent and the binder contained in the positive electrode active material layer may be the same as those in the intermediate layer.

Examples of the thickener include polysaccharide polymers such as carboxymethylcellulose (CMC) and methylcellulose. When the thickener has a functional group reactive with lithium, it is preferable to deactivate the functional group by methylation or the like in advance.

The filler is not particularly limited. Examples of the main component of the filler include polyolefins such as polypropylene and polyethylene, silica, alumina, zeolite and glass.

When the electrode is a positive electrode, the provision of the intermediate layer hardly affects the conductivity during normal operation. Thus, it is possible to effectively improve the insulating property during heat generation while securing good conductivity during normal operation.

### (Production method)

A method of producing the positive electrode is not particularly limited. For example, the positive electrode can be obtained by sequentially applying a paste for forming an intermediate layer and a paste for forming a positive electrode active material layer onto a positive electrode substrate and drying the pastes.

### <Secondary Battery (Nonaqueous Electrolyte Energy Storage Device)>

The secondary battery according to one embodiment of the present invention has a positive electrode as the electrode, a negative electrode, and a nonaqueous electrolyte. The positive electrode and the negative electrode usually form an electrode body stacked or wound with a separator interposed therebetween. The electrode assembly is housed in a case, and the case is filled with the nonaqueous electrolyte. The nonaqueous electrolyte is interposed between the positive electrode and the negative electrode. As the case, a known metal case, a resin case or the like, which is usually used as a case of a secondary battery, can be used.

### (Positive electrode)

The positive electrode provided in the secondary battery has a positive electrode substrate and a positive electrode active material layer disposed directly or via an intermediate layer on the positive electrode substrate. The positive electrode included in the secondary battery is preferably the positive electrode according to one embodiment of the present invention described above.

### (Negative electrode)

The negative electrode has a negative electrode substrate and a negative electrode active material layer disposed directly or via an intermediate layer on the negative electrode substrate. When the positive electrode is not the positive electrode according to one embodiment of the present invention described above, the electrode is the negative electrode according to one embodiment of the present invention including the negative electrode substrate, the intermediate layer, and the negative electrode active material layer in this order.

The negative electrode substrate may have the same configuration as that of the positive electrode substrate. As the material of the negative electrode substrate, metals such as copper, nickel, stainless steel, and nickel-plated steel or alloys thereof are used, and copper or a copper alloy is preferred. A copper foil is preferred as the negative electrode substrate. Examples of the copper foil include rolled copper foils and electrolytic copper foils.

The configuration of the intermediate layer in the negative electrode is not particularly limited, and can be formed from, for example, a composition containing a binder and a conductive agent. The intermediate layer of the negative electrode may be formed with the same composition as the above-described intermediate layer of the positive electrode.

The negative electrode active material layer is formed from a so-called negative composite containing a negative active material. The negative composite that forms the negative electrode active material layer contains optional components such as a conductive agent, a binder, a thickener and a filler as necessary. As regards the optional component such as a conductive agent, a binding agent, a thickener, or a filler, it is possible to use the same component as in the positive electrode active material layer.

As the negative active material, a material capable of absorbing and releasing lithium ions is normally used. Specific examples of the negative electrode active material include metals or metalloids such as Si and Sn; metal oxides or metalloid oxides such as a Si oxide and a Sn oxide; a polyphosphoric acid compound; and carbon materials such as graphite and non-graphitic carbon (easily graphitizable carbon or hardly graphitizable carbon).

The negative composite (negative electrode active material layer) may also contain a typical nonmetal element such as B, N, P, F, Cl, Br, or I, a typical metal element such as Li, Na, Mg, Al, K, Ca, Zn, Ga, or Ge, or a transition metal element such as Sc, Ti, V, Cr, Mn, Fe, Co, Ni, Cu, Mo, Zr, Ta, Hf, Nb, or W.

### (Separator)

As a material of the separator, for example, a woven fabric, a nonwoven fabric, a porous resin film or the like is used. Among them, a porous resin film is preferred. As a main component of the porous resin film, for example, a polyolefin such as polyethylene or polypropylene is preferred from the viewpoint of strength. A porous resin film in which these resins are combined with a resin such as aramid or polyimide may be used.

### (Nonaqueous electrolyte)

As the nonaqueous electrolyte, a known electrolyte generally used for nonaqueous electrolyte secondary batteries can be used, and a nonaqueous solvent in which an electrolyte salt is dissolved can be used.

Examples of the nonaqueous solvents include cyclic carbonates such as ethylene carbonate (EC), propylene carbonate (PC), and butylene carbonate (BC), and open-chain carbonates such as diethyl carbonate (DEC), dimethyl carbonate (DMC), and ethyl methyl carbonate (EMC).

Examples of the electrolyte salt include lithium salts, sodium salts, potassium salts, magnesium salts and onium salts, with lithium salts being preferable. Examples of the lithium salt include inorganic lithium salts such as LiPF₆, LiPO₂F₂, LiBF₄, LiClO₄, and LiN(SO₂F)₂, and lithium salts having a fluorinated hydrocarbon group, such as LiSO₃CF₃, LiN(SO₂CF₃)₂, LiN(SO₂C₂F₅)₂, LiN(SO₂CF₃)(SO₂C₄F₉), LiC(SO₂CF₃)₃ and LiC(SO₂C₂F₅)₃.

As the nonaqueous electrolyte, a salt that is melted at normal temperature (ionic liquid), a polymer solid electrolyte, or the like can also be used.

### (Production method)

A method of producing the secondary battery is not particularly limited. The method of producing the secondary battery includes, for example, a step of preparing a positive electrode, a step of preparing a negative electrode, a step of preparing a nonaqueous electrolyte, a step of forming an electrode assembly in which the positive electrode and the negative electrode are alternately superposed by stacking or winding the positive electrode and the negative electrode with a separator interposed between the electrodes, a step of housing the positive electrode and the negative electrode (electrode assembly) in a battery case, and a step of injecting the nonaqueous electrolyte into the battery case. A nonaqueous electrolyte secondary battery (nonaqueous electrolyte energy storage device) can be obtained by sealing an injection port after the injection. The details of each element constituting the nonaqueous electrolyte energy storage device (secondary battery) obtained by the production method are as described above.

### <Other Embodiments>

The present invention is not limited to the aforementioned embodiments, and, in addition to the aforementioned embodiments, can be carried out in various modes with alterations and/or improvements being made. For example, in the above embodiment, although the intermediate layer of the positive electrode contains the inorganic oxide, the intermediate layer of the positive electrode may not contain the inorganic oxide, and the intermediate layer of the negative electrode may contain the inorganic oxide. Each of the intermediate layer of the positive electrode and the intermediate layer of the negative electrode may contain the inorganic oxide. When the intermediate layer of the positive electrode contains the inorganic oxide, the negative electrode may not have the intermediate layer. Conversely, when the intermediate layer of the negative electrode contains the inorganic oxide, the positive electrode may not have the intermediate layer. In the positive electrode or the negative electrode, a covering layer or the like that covers the active material layer may be provided.

In the present embodiment, the electrode is used as the positive electrode of the energy storage device. However, the electrode may be used as the negative electrode, or may be used as both the positive electrode and the negative electrode.

In the above embodiment, the embodiment in which the energy storage device is a nonaqueous electrolyte secondary battery has been described, but another energy storage device may be used. Examples of another energy storage device include capacitors (electric double layer capacitors and lithium ion capacitors) and secondary batteries in which an electrolyte contains water.

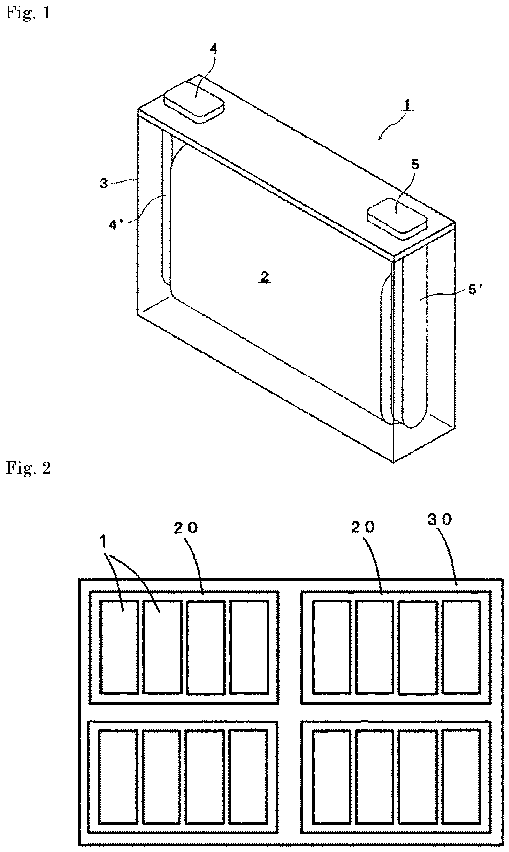

Fig. 1 is a schematic view of a rectangular nonaqueous electrolyte secondary battery 1 (secondary battery 1) as one embodiment of the energy storage device according to the present invention. Fig. 1 is a view showing the inside of a case in a perspective manner. In the secondary battery 1 shown in Fig. 1, an electrode assembly 2 is housed in a battery case 3. The electrode assembly 2 is formed by winding a positive electrode, including a positive electrode active material, and a negative electrode, including a negative electrode active material, with a separator interposed between the electrodes. The positive electrode is electrically connected to a positive electrode terminal 4 through a positive electrode lead 4', and the negative electrode is electrically connected to a negative electrode terminal 5 through a negative electrode lead 5'. A nonaqueous electrolyte is injected in the battery case 3. The specific configuration of each element such as the positive electrode is as described above.

The configuration of the energy storage device according to the present invention is not particularly limited, and examples include cylindrical batteries, prismatic batteries (rectangular batteries) and flat batteries. The present invention can also be implemented as an energy storage apparatus including a plurality of the nonaqueous electrolyte energy storage devices as described above. Fig. 2 shows one embodiment of an energy storage apparatus. In Fig. 2, an energy storage apparatus 30 includes a plurality of energy storage units 20. Each of the energy storage units 20 includes a plurality of the secondary batteries 1. The energy storage apparatus 30 can be mounted as a power source for an automobile such as an electric vehicle (EV), a hybrid vehicle (HEV), a plug-in hybrid vehicle (PHEV), or the like.

### EXAMPLES

Hereinafter, the present invention will be described further in detail by way of examples, but the present invention is not limited to the following examples.

### [Example 1]

### (Production of positive electrode)

An intermediate layer was formed on the surface of an aluminum foil (average thickness 15 pm) as a positive electrode substrate in the following manner. Acetylene black (AB), alumina (manufactured by Sumitomo Chemical Co., Ltd., particle size: about 300 nm, BET specific surface area: 4.9 m²/g) and polyvinylidene fluoride (PVDF) were weighed at a mass ratio of 8 : 77 : 15. These materials were mixed with N-methyl-2-pyrrolidone (NMP) as a dispersion medium to prepare a paste for forming an intermediate layer. The paste for forming an intermediate layer was applied to an aluminum foil. Thereafter, drying was performed to obtain an intermediate layer having an average thickness of 8 µm.

Li(Ni_{0.82}Co_{0.15}Al_{0.03})O₂ as a positive electrode active material, AB and PVDF were contained in a mass ratio of 95 : 3 : 2 (in terms of solid content), and a paste for forming a positive electrode active material layer in which N-methyl-2-pyrrolidone was used as a dispersion medium was prepared. The paste for forming a positive electrode active material was applied to the surface of the intermediate layer and dried to remove the dispersion medium. Thereafter, pressure molding was performed using a roller press machine to obtain a positive electrode of Example 1. The average thickness of the intermediate layer after the pressure molding was 4 pm. The positive electrode was provided with a tab on which the intermediate layer and the positive electrode active material layer were not stacked.

### [Example 2]

A positive electrode of Example 2 was obtained in the same manner as in Example 1, except that acetylene black (AB), alumina (manufactured by Nippon Aerosil Co., Ltd., particle size: about 70 nm, BET specific surface area: 94 m²/g) and polyvinylidene fluoride (PVDF) were weighed at a mass ratio of 8 : 62 : 30, and these materials were mixed with N-methyl-2-pyrrolidone (NMP) as a dispersion medium to prepare a paste for forming an intermediate layer.

### [Example 3]

A positive electrode of Example 3 was obtained in the same manner as in Example 1, except that acetylene black (AB), alumina (manufactured by Nippon Aerosil Co., Ltd.), a reactant of bismaleimide and barbituric acid, which are thermally crosslinkable compounds, and polyvinylidene fluoride (PVDF) were weighed at a mass ratio of 8 : 55 : 20 : 15, and these materials were mixed with N-methyl-2-pyrrolidone (NMP) as a dispersion medium to prepare a paste for forming an intermediate layer.

### [Example 4]

A positive electrode of Example 4 was obtained in the same manner as in Example 1, except that acetylene black (AB), barium titanate, and polyvinylidene fluoride (PVDF) were weighed at a mass ratio of 8 : 77 : 15, and these materials were mixed with N-methyl-2-pyrrolidone (NMP) as a dispersion medium to prepare a paste for forming an intermediate layer.

### [Example 5]

A positive electrode of Example 5 was obtained in the same manner as in Example 1, except that LiNi_{0.5}Co_{0.2}Mn_{0.3}O₂ as a positive electrode active material, AB and PVDF were contained in a mass ratio of 93 : 4 : 3 (in terms of solid content), the paste for forming a positive electrode active material layer in which N-methyl-2-pyrrolidone was used as a dispersion medium was used, the average thickness of the intermediate layer after drying (before pressure molding) was 6 pm, and the average thickness after pressure molding was 2.5 pm.

### [Example 6]

A positive electrode of Example 6 was obtained in the same manner as in Example 5, except that the mass ratio of AB, alumina, and PVDF contained in a paste for forming an intermediate layer was 4 : 81 : 15.

### [Example 7]

A positive electrode of Example 7 was obtained in the same manner as in Example 5, except that the mass ratio of AB, alumina, and PVDF contained in a paste for forming an intermediate layer was 12 : 73 : 15.

### [Example 8]

A positive electrode of Example 8 was obtained in the same manner as in Example 5, except that the mass ratio of AB, alumina, and PVDF contained in a paste for forming an intermediate layer was 20 : 65 : 15.

### [Comparative Example 1]

A positive electrode of Comparative Example 1 was obtained in the same manner as in Example 1, except that the intermediate layer was not provided.

### [Comparative Example 2]

A positive electrode of Comparative Example 2 was obtained in the same manner as in Example 1, except that as materials for the intermediate layer, AB and PVDF were used in a mass ratio of 8 : 92, and alumina was not included.

### [Evaluation]

### (Change in resistance due to heating)

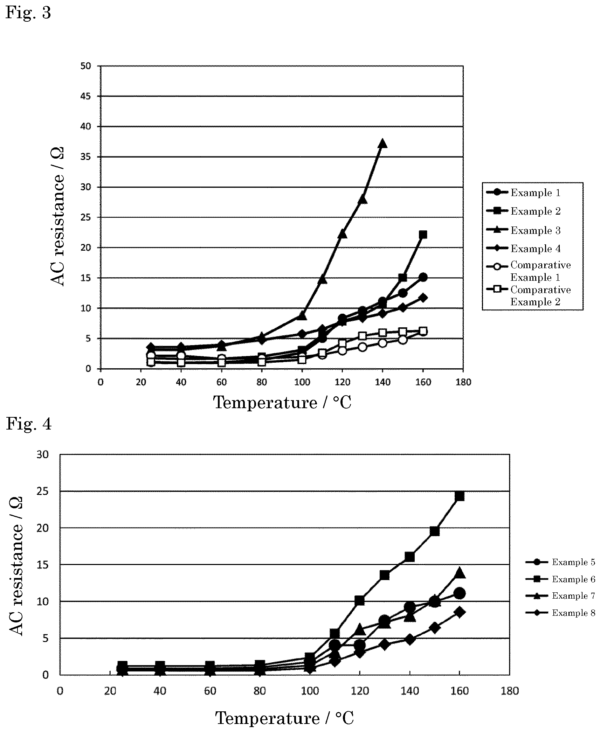

Each AC impedance (ACR) of the positive electrodes obtained in Examples 1 to 8 and Comparative Example 1 was measured while increasing the temperature. Specifically, first, two positive electrodes of the same type were stacked with a separator interposed between the electrodes so that the positive electrode active materials faced each other, and the laminate was impregnated with an electrolyte containing 1 M of LiPF₆ and having an EC : EMC ratio of 20 : 80 (volume ratio). The ACR between the positive electrode substrates was measured for this laminate using an AC resistance meter while gradually increasing the temperature to 160°C by 5°C or 10°C. Figs. 3 and 4 show the measurement results.

### (Nail penetration test)

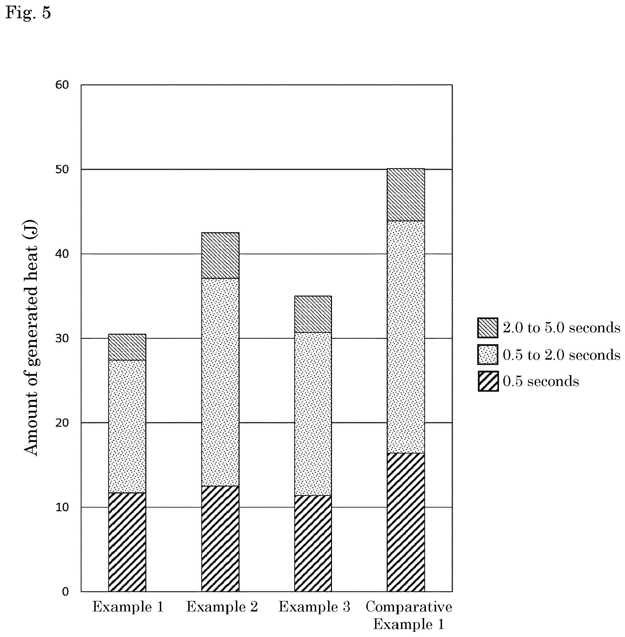

An electrode assembly was produced by sandwiching a polyolefin porous resin film separator between each positive electrode obtained in Examples 1 to 3 and Comparative Example 1 and a negative electrode whose negative electrode active material was graphite. The electrode assembly was housed in a metal-resin composite film as an outer case so that a tab of each electrode was exposed, and sealed. Thus, a dry cell was obtained. A nail penetration test was performed on the dry cell by applying a voltage of 4.35 V between the positive electrode and the negative electrode and allowing a nail to penetrate in an electrode stacking direction. An amount of heat generated in each range of 0 to 0.5 seconds, 0.5 to 2.0 seconds, and 2.0 to 5.0 seconds was analyzed based on a value of a change in a resistance value Rdz to 5 seconds after the nail was penetrated and a short circuit occurred. It is presumed that the heat that starts to be generated in 0 to 0.5 seconds is caused by the short circuit in the nail penetration, the heat that starts to be generated in 0.5 to 2.0 seconds is caused by a melting phenomenon of the separator, and the heat that starts to be generated in 2.0 to 5.0 seconds is caused by large-current discharge. Fig. 5 shows the analysis results.

### (Heating test of nonaqueous electrolyte secondary battery)

An electrode assembly was produced by sandwiching a polyolefin porous resin film separator between each positive electrode of Examples 1 to 3 and Comparative Example 1 and a negative electrode whose negative electrode active material was graphite. The electrode assembly was housed in a metal-resin composite film as an outer case so that a tab of each electrode was exposed, the electrolyte described above was injected, and the electrode assembly was then sealed. Thus, a nonaqueous electrolyte secondary battery was obtained.

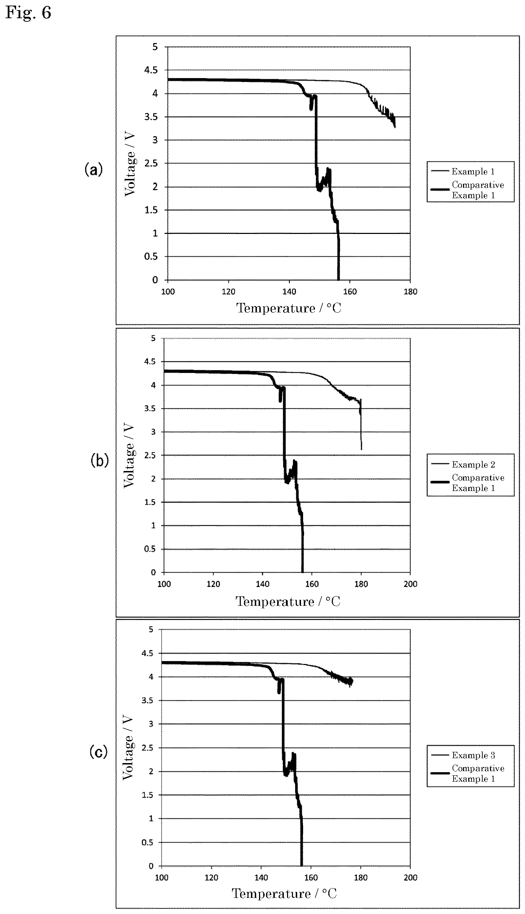

With respect to each of the obtained nonaqueous electrolyte secondary batteries, a charge termination condition was set until a charge current reached 1/100 C, and the battery was charged at a charge termination voltage of 4.35 V. Thereafter, with the nonaqueous electrolyte secondary battery fixed, the battery was heated by a heater, and a change in voltage was measured. The heating rate was 5°C/min. With the heating, a short circuit occurred, and the voltage decreased. Fig. 6 is a graph in which the voltage of each nonaqueous electrolyte secondary battery is plotted with respect to the temperature of each nonaqueous electrolyte secondary battery.

As shown in Fig. 3, in the positive electrodes of Examples 1 to 3 including the intermediate layer containing alumina and the positive electrodes of Example 4 including the intermediate layer containing barium titanate, it can be seen that electrical resistance greatly increases due to a temperature rise, and the positive electrodes have a good shutdown function on heat generation and high safety. In particular, in Example 3, which contained alumina and a thermally crosslinkable compound, the electrical resistance greatly increased due to a temperature rise, and the shutdown function on heat generation was excellent. Also in the positive electrode of Comparative Example 1 in which the intermediate layer is not provided and the positive electrode of Comparative Example 2 having the intermediate layer containing no alumina, although a certain rise in resistance is observed, it can be seen that the shutdown function is inferior to Examples 1 to 4.

As shown in Fig. 4, also in Examples 5 to 8 including a positive electrode active material layer containing LiNi_{0.5}Co_{0.2}Mn_{0.3}O₂ as a positive electrode active material and an intermediate layer containing 65% by mass to 81% by mass of alumina and 4% by mass to 20% by mass of a conductive agent AB, it can be seen that the electrical resistance greatly increases due to a temperature rise, and a good shutdown function on heat generation is provided. Among these, in Example 6 in which the content of AB in the intermediate layer was 4% by mass and Example 7 in which the content of AB was 12% by mass, a degree of increase in electrical resistance due to a temperature rise was high. In particular, in Example 6, the electrical resistance greatly increased due to a temperature rise, and the shutdown function on heat generation was excellent.

As shown in Fig. 5, in dry cells using the positive electrodes of Examples 1 and 2 in which the intermediate layer contains alumina and the positive electrode of Example 3 containing alumina and a thermally crosslinkable compound, it can be seen that heat generation after nail penetration is suppressed as compared to Comparative Example 1 in which the intermediate layer is not provided.

As shown in Figs. 6(a) to 6(c), it can be seen that in a nonaqueous electrolyte secondary batteries using the positive electrodes of Examples 1 to 3 in which the intermediate layer contains alumina, a high voltage is maintained even at a high temperature as compared with a nonaqueous electrolyte secondary battery using the positive electrode of Comparative Example 1 in which the intermediate layer is not provided. This means that when a short circuit occurs, a good shutdown function is exhibited. That is, it can be seen that each nonaqueous electrolyte secondary battery of Examples 1 to 3 has higher safety than the nonaqueous electrolyte secondary battery of Comparative Example 1. In particular, in Example 3 containing alumina and a thermally crosslinkable compound, a voltage drop was very small.

### INDUSTRIAL APPLICABILITY

The present invention can be applied to nonaqueous electrolyte secondary batteries to be used as power sources for electronic devices such as personal computers and communication terminals, automobiles and the like.

### DESCRIPTION OF REFERENCE SIGNS

- 1: Nonaqueous electrolyte secondary battery
- 2: Electrode assembly
- 3: Battery case
- 4: Positive electrode terminal
- 4': Positive electrode lead
- 5: Negative electrode terminal
- 5': Negative electrode lead
- 20: Energy storage unit
- 30: Energy storage apparatus

## Claims

1. An electrode for an energy storage device comprising a conductive substrate, an intermediate layer, and an active material layer in this order,
wherein the intermediate layer includes a conductive agent, an inorganic oxide, and a binder, and
a content of the inorganic oxide in the intermediate layer is 30% by mass or more and 90% by mass or less.

2. The electrode according to claim 1, wherein the content of the inorganic oxide in the intermediate layer is 85% by mass or less.

3. The electrode according to claim 1 or 2, wherein a content of the binder in the intermediate layer is 5% by mass or more.

4. The electrode according to claim 1, 2 or 3, wherein a content of the conductive agent in the intermediate layer is 2% by mass or more and 15% by mass or less.

5. The electrode according to any one of claims 1 to 4, wherein the content of the inorganic oxide with respect to the content of the conductive agent in the intermediate layer is 3 times or more and 20 times or less by mass ratio.

6. The electrode according to any one of claims 1 to 5, wherein the binder contains a fluororesin.

7. The electrode according to any one of claims 1 to 6, wherein the intermediate layer further contains a compound that causes a crosslinking reaction by heat.

8. The electrode according to any one of claims 1 to 7, which is a positive electrode.

9. An energy storage device comprising the electrode according to any one of claims 1 to 8.
